# EUROPEAN PATENT APPLICATION

(11) **EP 3 064 753 A1**
(43) Date of publication of application: **07.09.2016**
(21) Application number: 13896802.9
(22) Date of filing: 31.10.2013
(51) Int. Cl.: F02G 5/04, F01K 23/10, F01K 25/10

(54) **ENGINE EXHAUST HEAT RECOVERY SYSTEM**

(71) Applicant: The Chugoku Electric Power Co., Inc., Hiroshima-shi, Hiroshima 730-8701 (JP)
(72) Inventor: YAMASAKI, Toshiki, Hiroshima-shi Hiroshima 730-8701 (JP); KUBOTA, Haruhito, Hiroshima-shi Hiroshima 730-8701 (JP); YAMAMURA, Yukimasa, Hiroshima-shi Hiroshima 730-8701 (JP); WADA, Yasutaka, Hiroshima-shi Hiroshima 730-8701 (JP); OYAMA, Keiji, Hiroshima-shi Hiroshima 730-8701 (JP); UCHIYAMA, Ichiro, Hiroshima-shi Hiroshima 730-8701 (JP)
(74) Representative: Osha Liang
(86) International application number: PCT/JP2013/079616
(87) International publication number: WO 2015/063935

(57) **Abstract**

[Problem]

To provide an exhaust heat recovery apparatus that effectively uses exhaust heat from an engine and ensures protecting the engine and its peripherals.

[Solution]

An exhaust heat recovery apparatus (1) of an engine includes an engine (71), a first cooler (3), a heat exchanger (2), and a first valve device (52). The first cooler (3) contains a first cooling medium to cool a first mechanism to be cooled of the engine (71). The first cooler (3) is configured to exchange heat between water at a first temperature output from a warm water utilization facility and the first cooling medium to output water at a second temperature higher than the first temperature. The heat exchanger (2) is configured to exchange heat between the water at the second temperature and exhaust gas from the engine to output water at a third temperature, higher than the second temperature, and supply the water at the third temperature to the warm water utilization facility. The first valve device (52) is configured to cause the water at the first temperature to be supplied to the heat exchanger (2) when a temperature of the first cooling medium is lower than a temperature on a side of the first cooler (3) to which the water at the first temperature is supplied.

## Description

### TECHNICAL FIELD

The present invention relates to an exhaust heat recovery apparatus of an engine.

### BACKGROUND ART

For example, there has been known a device that includes heat exchangers at respective passages for cooling water for an engine and for exhaust gas. After raising a temperature of a working fluid with the heat exchanger for cooling water, the temperature is further increased with the heat exchanger for exhaust gas to recover heat from the cooling water and the exhaust gas (for example, see Patent Document 1). The recovered heat is used as heat sources for a hot water supply facility and other power generation facilities.

### Citation List

### Patent Literature

Patent Document 1: Japanese Patent Application Laid-open Publication No. 10-141137

### SUMMARY

### TECHNICAL PROBLEM

However, when the temperature of the cooling water is lower than the temperature of the heat exchanger, the above-described recovery device of heat of the engine has the following issue.

That is, at an engine start, the heat exchanger for cooling water does not recover the heat from the cooling water. On the contrary, the heat exchanger for cooling water possibly deprives the working fluid of heat, adversely affecting an effective use of exhaust heat from the engine.

During a steady operation of the engine, the heat exchanger for cooling water deprives the working fluid of heat, possibly resulting in providing the heat to the cooling water. This increases the temperature of the cooling water, an upper limit value of the temperature is exceeded, and the engine overheats. Consequently, this possibly damages the engine and its peripherals.

### SOLUTION TO PROBLEM

The present invention to solve the above-describedproblems includes an engine, a first cooler, a heat exchanger, and a first valve device. The first cooler contains a first cooling medium to cool a first mechanism to be cooled of the engine. The first cooler is configured to exchange heat between water at a first temperature output f rom a warmwater uti li zation facility and the first coolingmediumto output water at a second temperature. The second temperature is higher than the first temperature. The heat exchanger is configured to exchange heat between the water at the second temperature and exhaust gas from the engine to output water at a third temperature and supply the water at the third temperature to the warm water utilization facility. The third temperature is higher than the second temperature. The first valve device is configured to cause the water at the first temperature to be supplied to the heat exchanger when a temperature of the first cooling medium is lower than a temperature on a side of the first cooler to which the water at the first temperature is supplied.

Other features of the present invention will become apparent from descriptions of the accompanying drawings and of the present specification.

### ADVANTAGEOUS EFFECTS OF INVENTION

According to the present invention, exhaust heat from the engine is effectively used and the engine and its peripherals can be protected.

### BRIEF DESCRIPTION OF DRAWINGS

Fig. 1 is a schematic diagram of an exhaust heat recovery apparatus of an engine of an embodiment of the present invention.
Fig. 2 illustrates an example of a flow of water in the exhaust heat recovery apparatus during a steady operation of the engine.
Fig. 3 illustrates another example of a flow of water in the exhaust heat recovery apparatus during the steady operation of the engine.
Fig. 4 illustrates yet another example of a flow of water in the exhaust heat recovery apparatus during the steady operation of the engine.
Fig. 5 illustrates an example of a flow of water in the exhaust heat recovery apparatus at an engine start.
Fig. 6 illustrates another example of a flow of water in the exhaust heat recovery apparatus at the engine start.
Fig. 7 illustrates an example of a flow of water when the exhaust heat recovery apparatus is superheated.
Fig. 8 illustrates another example of a flow of water when the exhaust heat recovery apparatus is superheated.
Fig. 9 illustrates an example of a facility to which the exhaust heat recovery apparatus of the embodiment of this invention is coupled.

### DESCRIPTION OF EMBODIMENTS

At least the following matters will be come apparent from descriptions of the present specification and of the accompanying drawings.

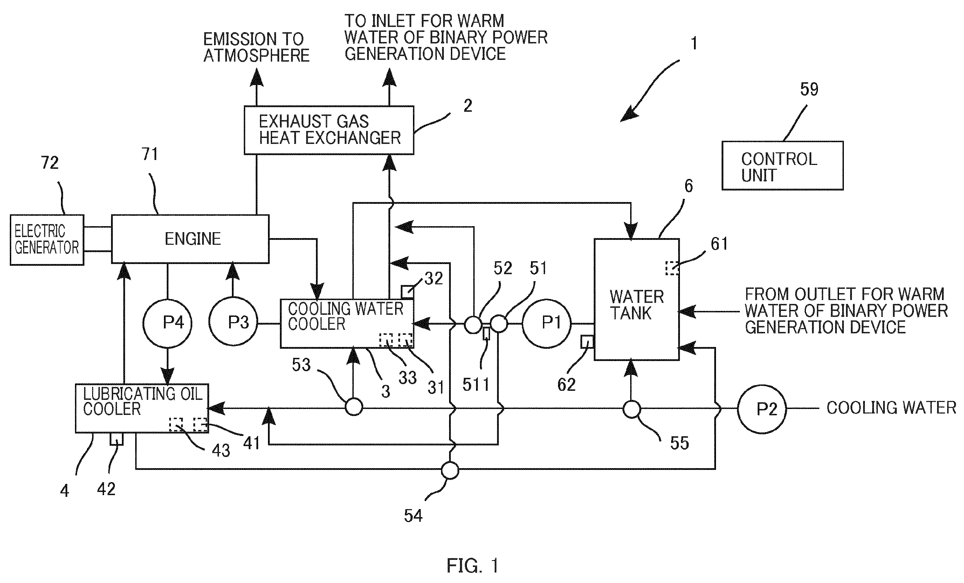

With reference to Fig. 1 to Fig. 9, the following describes an exhaust heat recovery apparatus of an embodiment of the present invention. In this embodiment, water output from an exhaust gas heat exchanger 2 of an exhaust heat recovery apparatus 1 is used by a binary power generation device 8 and is recovered to a water tank 6 of the exhaust heat recovery apparatus 1. An engine 71 of this embodiment is used as a power engine for an electric generator 72. Cooling water of the engine 71 is cooled while the cooling water is circulated between the engine 71 and a cooling water cooler 3 with a pump P3. Lubricating oil for the engine 71 is cooled while the lubricating oil is circulated between the engine 71 and a lubricating oil cooler 4 with a pump P4.

### === Configuration ===

Fig. 1 is a schematic diagram of the exhaust heat recovery apparatus of this embodiment of this invention. As illustrated in Fig. 1, the exhaust heat recovery apparatus 1 includes the exhaust gas heat exchanger 2, the cooling water cooler 3, the lubricating oil cooler 4, valves 51 to 55, and the water tank 6. With components of the exhaust heat recovery apparatus 1 each coupled to other components as described later, the components are mutually coupled via, for example, water pipes.

In the exhaust heat recovery apparatus 1, water, which is a working medium, is preheated by a preheating system, which will be described later. After that, the water is heated by the exhaust gas heat exchanger 2 and then is sent to the binary power generation device 8. The exhaust heat recovery apparatus 1 includes a main preheating system and a sub preheating system. The main preheating system includes from the water tank 6, through the valves 51 and 52 and the cooling water cooler 3, and to the exhaust gas heat exchanger 2. The sub preheating system includes from the water tank 6, through the valve 51, the lubricating oil cooler 4, and the valve 54, and to the exhaust gas heat exchanger 2. The exhaust heat recovery apparatus 1 includes a cooling water supply system. The cooling water supply system supplies cooling water to the cooling water cooler 3, the lubricating oil cooler 4, and the water tank 6 via the valves 53 and 55.

### <Main Preheating System>

As described above, the main preheating system includes from the water tank 6, through the valves 51 and 52 and the cooling water cooler 3, and to the exhaust gas heat exchanger 2.

To describe specifically, the water tank 6 is a device that accumulates the water output from the binary power generation device 8. The water tank 6 is coupled to an outlet for water in the binary power generation device 8 via the water pipe. The water tank 6 recovers the water returned from the cooling water cooler 3 and the lubricating oil cooler 4 and receives the cooling water replenished from the valve 55. After accumulating the water as described above, the water tank 6 outputs the accumulated water to the valve 51.

The water tank 6 includes a water level sensor 61, which measures the water level of the water tank 6. When the measured value falls below a predetermined lower limit, the water level sensor 61 outputs a measurement signal to a control unit 59 such that the cooling water is replenished via the valve 55.

A temperature sensor 62 is disposed to the outlet for water at the water tank 6. The temperature sensor 62 measures a temperature T1 of water output from the water tank 6 and outputs the measurement signal to the control unit 59. The temperature of water flowing from the binary power generation device 8 into the water tank 6 is, for example, around 80 Celsius degrees.

The water output from the water tank 6 is sent to the cooling water cooler 3 through the valves 51 and 52 with the pump P1. The valves 51 and 52 will be described later.

The cooling water cooler 3 is a device that contains cooling water as a cooling medium to cool a peripheral area of a combustion chamber of the engine 71. The cooling water cooler 3 exchanges heat between the cooling water of the engine 71 and the water output from the water tank 6. Thus, the cooling water cooler 3 cools the cooling water of the engine 71, preheats the water from the water tank 6, and outputs the water to the exhaust gas heat exchanger 2. An inlet for water in the cooling water cooler 3 is coupled to the outlet for water in the valve 52. The outlet for water in the cooling water cooler 3 is coupled to the inlet for water in the exhaust gas heat exchanger 2.

The cooling water cooler 3 includes a cooling water inlet and a cooling water outlet. The cooling water is supplied to the cooling water inlet via the valve 53. The cooling water whose temperature has increased by the cooling water cooler 3 is output to the water tank 6 with the cooling water outlet.

The cooling water cooler 3 includes two temperature sensors 31 and 32. The temperature sensor 31 measures a temperature T2 of the cooling water cooler 3 and outputs a measurement signal to the control unit 59. The temperature sensor 32 is disposed to the outlet for water at the cooling water cooler 3. The temperature sensor 32 measures a temperature T3 of water output from the cooling water cooler 3 and outputs the measurement signal to the control unit 59. The cooling water cooler 3 includes a flowmeter 33. The flowmeter 33 measures a flow rate of the water flowing into the cooling water cooler 3. When the measured value falls below a predetermined lower limit, the flowmeter 33 outputs the measurement signal to the control unit 59 to receive replenishment of cooling water from the valve 53.

The water preheated in the cooling water cooler 3 is output to the exhaust gas heat exchanger 2. For example, in the case where the water output from the binary power generation device 8 has a temperature of around 80 Celsius degrees, heat of the water is slightly dissipated in the water tank 6 and is output from the water tank 6 at a temperature around 70 Celsius degrees. The water at such temperature is preheated by the cooling water cooler 3 at a temperature up to 90 Celsius degrees as a limit and then is output.

The exhaust gas heat exchanger 2 is a device that heats the water preheated by the cooling water cooler 3 by heat exchange with the exhaust gas from the engine 71. The outlet for water at the exhaust gas heat exchanger 2 is coupled to the inlet for water at the binary power generation device 8. The water heated by the exhaust gas heat exchanger 2 is output to the binary power generation device 8. For example, the exhaust gas from the engine 71 in the embodiment is around 500 Celsius degrees. The temperature of water after the heat exchange fully exceeds 95 Celsius degrees, which is a temperature required in the binary power generation device 8. The heat exchange by the exhaust gas heat exchanger 2 reduces the temperature of the exhaust gas from the engine 71 to 200 to 300 Celsius degrees and then the exhaust gas is emitted to the atmosphere.

### <Sub Preheating System>

As described above, the sub preheating system includes from the water tank 6, through the valve 51, the lubricating oil cooler 4, and the valve 54, and to the exhaust gas heat exchanger 2.

Specifically, the lubricating oil cooler 4 is a device that contains lubricating oil as a cooling medium to cool the inside of the engine 71. The lubricating oil cooler 4 exchanges heat between the lubricating oil of the engine 71 and the water output from the water tank 6. Thus, the lubricating oil cooler 4 cools the lubricating oil of the engine 71, preheats the water from the water tank 6, and outputs the water. An inlet for water in the lubricating oil cooler 4 is coupled to one outlet for water in the valve 51. The outlet for water in the lubricating oil cooler 4 is coupled to the inlet for water in the valve 54. One outlet for water in the valve 54 is coupled to the exhaust gas heat exchanger 2. Accordingly, the lubricating oil cooler 4 preheats the water supplied from the water tank 6 to the lubricating oil cooler 4 via the valve 51. After that, the water is output to the exhaust gas heat exchanger 2 for heating or, as described later, is recovered to the water tank 6 for additional preheating.

The lubricating oil cooler 4 includes two temperature sensors 41 and 42. The temperature sensor 41 measures a temperature T4 of the lubricating oil cooler 4 and outputs the measurement signal to the control unit 59. The temperature sensor 42 is disposed to the outlet for water of the lubricating oil cooler 4. The temperature sensor 42 measures a temperature T5 of water output from the lubricating oil cooler 4 and outputs the measurement signal to the control unit 59. The lubricating oil cooler 4 includes a flowmeter 43. The flowmeter 43 measures a flow rate of the water flowing into the lubricating oil cooler 4. When the measured value falls below a predetermined lower limit, the flowmeter 43 outputs the measurement signal to the control unit 59 to receive replenishment of cooling water from the valve 53.

### <Cooling Water Supply System>

As described above, the cooling water supply system supplies the cooling water to the cooling water cooler 3, the lubricating oil cooler 4, and the water tank 6 via the valves 53 and 55. The cooling water is supplied from a facility different from the binary power generation device 8, for example, waterworks. From an aspect of preventing a scale, the use of fresh water as the cooling water is preferable.

Specifically, the cooling water inlet of the valve 55 is coupled to, for example, the waterworks via a pump P2. The one cooling water outlet for the valve 55 is coupled to the cooling water inlet for the water tank 6, and another cooling water outlet is coupled to the cooling water inlet for the valve 53. The one cooling water outlet for the valve 53 is coupled to the cooling water inlet for the cooling water cooler 3, and the other coolingwater outlet is coupled to the coolingwater inlet for the lubricating oil cooler 4.

Accordingly, under conditions described later, the cooling water is supplied to the cooling water cooler 3 and the lubricating oil cooler 4 via the valve 53 and also is supplied to the water tank 6 via the valve 55.

### <Valve>

The valves 51, 52, and 54 are devices to adjust a flow of water in the main and sub preheating systems. The valves 53 and 55 are devices to adjust a flow of cooling water in the cooling water supply system. The valves 51 to 55 operate based on the output from the control unit 59.

Specifically, the valve 51 is a device that distributes and outputs the water supplied from the water tank 6 to the valve 52 and the lubricating oil cooler 4. Accordingly, the valve 51 includes the one inlet and the two outlets. The water from the water tank 6 flows into the inlet. The water is output from the outlets to each of the valve 52 side and the lubricating oil cooler 4 side.

The distribution of water output from the valve 51 is changed according to the situation. For example, the water may be all output to the valve 52 side or may be all output to the lubricating oil cooler 4 side. The water may be half output to the valve 52 side and half output to the lubricating oil cooler 4 side. Alternatively, one-third of the water may be output to the valve 52 side, and two-third of the water may be output to the lubricating oil cooler 4 side. During a usual operation of the exhaust heat recovery apparatus 1, the valve 51 is controlled such that the water is output to both the valve 52 side and the lubricating oil cooler 4 side.

To the outlet on the valve 52 side in the valve 51, a temperature sensor 511 is disposed. The temperature sensor 511 measures a temperature T6 of water output from the valve 51 to the valve 52 side and outputs the measurement signal to the control unit 59.

The valve 52 is disposed at a flow passage coupling the valve 51 and the cooling water cooler 3. When the temperature T2 of the cooling water cooler 3 is lower than the temperature T6 of water, which is output from the valve 51 to the valve 52 side, the valve 52 is a device that supplies the water at the temperature T6 to the exhaust gas heat exchanger 2. That is, the valve 52 forms the flow passage with which the water from the water tank 6 is supplied to the exhaust gas heat exchanger 2 without passing through the cooling water cooler 3 in the above-described case. In the case other than that, the valve 52 causes the water at the temperature T6 to be supplied to the cooling water cooler 3.

The valve 53 is a device that supplies the cooling water to the cooling water cooler 3 and the lubricating oil cooler 4 when the main and the sub preheating systems are superheated. Specifically, the valve 53 operates in the case where the temperature T2 of the cooling water cooler 3 exceeds a predetermined allowable temperature and in the case where the temperature T4 of the lubricating oil cooler 4 exceeds a predetermined allowable temperature. The valve 53 causes the cooling water to be supplied to the cooling water cooler 3 and the lubricating oil cooler 4 also in the case where the flow rate of the water supplied to each of the cooling water cooler 3 and lubricating oil cooler 4 falls below the respective predetermined lower limits. In the case other than these two cases, the valve 53 is set such that the operation is disabled, however, the valve 53 may be configured to operate according to the situation.

The valve 54 is a device that supplies the water output from the lubricating oil cooler 4 to any of the exhaust gas heat exchanger 2 and the water tank 6. That is, in the case where the temperature T5 of water output from the lubricating oil cooler 4 is lower than the temperature T3 of water output from the cooling water cooler 3, the valve 54 causes the water tank 6 to recover the water output from the lubricating oil cooler 4. In cases except for the above, the valve 54 causes the water to be supplied to the exhaust gas heat exchanger 2.

The valve 55 is a device that causes the cooling water to be supplied to the water tank 6 when the water level of the water tank 6 falls below the predetermined lower limit.

### <Control Unit>

The control unit 59 is a device that controls the valves 51 to 55 based on the measurement signals output from the temperature sensors 31, 32, 41, 42, 62, and 511, the flowmeters 33 and 43, and the water level sensor 61.

Specifically, the control unit 59 compares the temperature T4 of the lubricating oil cooler 4, which has been measured with the temperature sensor 41, with the temperature T1 of water, which is output from the water tank 6 and has been measured with the temperature sensor 62. When the temperature T4 is higher than the temperature T1, the control unit 59 controls the valve 51 such that the water output from the water tank 6 is supplied to the lubricating oil cooler 4 for heat exchange. On the other hand, when the temperature T4 is lower than the temperature T1, the control unit 59 controls the valve 51 such that the water from the water tank 6 is supplied to the valve 52.

The control unit 59 compares the temperature T2 of the cooling water cooler 3, which has been measured with the temperature sensor 31, with the temperature T6 of water, which is output from the valve 51 to the valve 52 side and has been measured with the temperature sensor 511. When the temperature T2 is lower than the temperature T6, the control unit 59 controls the valve 52 such that the water supplied from the valve 51 is supplied to the exhaust gas heat exchanger 2 without passing through the cooling water cooler 3. On the other hand, when the temperature T2 is higher than the temperature T6, the control unit 59 controls the valve 52 such that the water supplied from the valve 51 is supplied to the cooling water cooler 3.

When the temperature T2 of the cooling water cooler 3, which has been measured with the temperature sensor 31, exceeds the allowable temperature of the cooling water cooler 3 and the temperature T4 of the lubricating oil cooler 4, which has been measured with the temperature sensor 41, exceeds the allowable temperature of the lubricating oil cooler 4, the control unit 59 controls the valve 53 such that the cooling water is supplied from the valve 53 to the coolingwater cooler 3 and the lubricating oil cooler 4. Additionally, when the flow rate of the water flowing through the cooling water cooler 3, which has been measured by the flowmeter 33, falls below the predetermined lower limit and also when the flow rate of the water flowing through the lubricating oil cooler 4, which has been measured by the flowmeter 43, falls below the predetermined lower limit, the control unit 59 controls the valve 53 such that the cooling water is supplied to the cooling water cooler 3 and the lubricating oil cooler 4. In the case other than these two cases, the control unit 59 controls the valve 53 such that the cooling water is supplied to neither the cooling water cooler 3 nor the lubricating oil cooler 4. For example, in the case of an engine for generating electricity, the cooling water and the lubricating oil of the engine 71 reaches a temperature around 200 to 300 Celsius degrees. However, the allowable temperatures of the respective cooling water cooler 3 and lubricating oil cooler 4 are around 95 Celsius degrees.

Furthermore, the control unit 59 compares the temperature T3 of water, which is output from the cooling water cooler 3 and that has been measured with the temperature sensor 32, with the temperature T5 of water, which is output from the lubricating oil cooler 4 and that has been measured with the temperature sensor 42. When the temperature T3 is higher than the temperature T5, the control unit 59 controls the valve 54 such that the water at the temperature T5 output from the lubricating oil cooler 4 is recovered to the water tank 6. On the other hand, when the temperature T3 is lower than the temperature T5, the control unit 59 controls the valve 54 such that the water at the temperature T5 output from the lubricating oil cooler 4 is supplied to the exhaust gas heat exchanger 2.

When the water level of the water tank 6 that has been measured by the water level sensor 61 falls below the predetermined lower limit, the control unit 59 controls the valve 55 such that the cooling water is replenished to the water tank 6.

### <Binary Power Generation Device>

In this embodiment, the binary power generation device 8 uses the water that has been heated in the exhaust heat recovery apparatus 1. That is, this embodiment is configured as a multistage power generation system that further generates electricity using the exhaust heat from the engine 71 simultaneously with the electric generation using the engine 71 as a power engine.

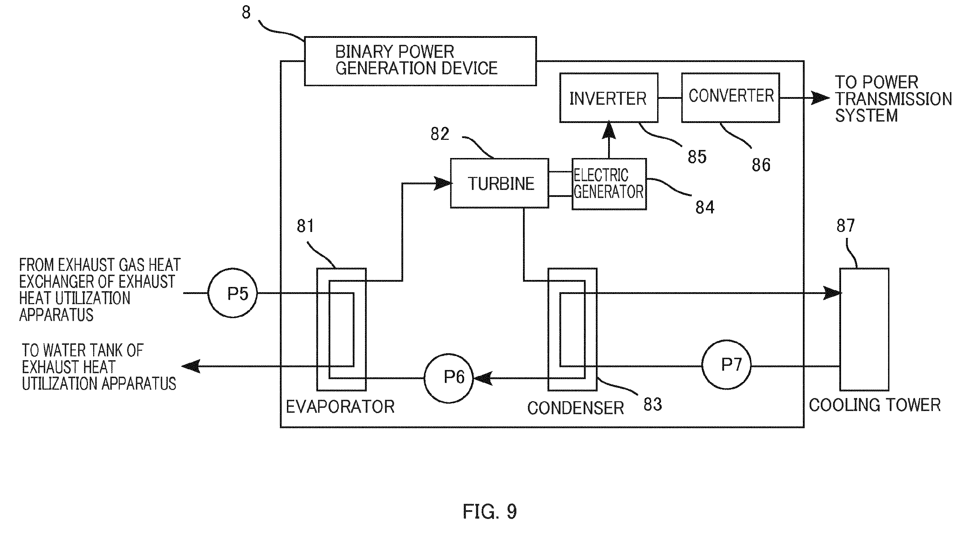

As illustrated in Fig. 9, the binary power generation device 8 includes an evaporator 81, a turbine 82, a condenser 83, an electric generator 84, an inverter 85, a converter 86, and a cooling tower 87. An appropriate temperature of water input to the binary power generation device 8 is, for example, around 95 Celsius degrees. A temperature of warm water output from the binary power generation device 8 is, for example, around 83 Celsius degrees.

The water output from the exhaust gas heat exchanger 2 of the exhaust heat recovery apparatus 1 is guided to the evaporator 81 of the binary power generation device 8. After the evaporator 81 provides heat to the working medium of the binary power generation device 8, the working medium is returned to the water tank 6 in the exhaust heat recovery apparatus 1.

The evaporator 81 heats and evaporates the working medium of the binary power generation device 8. The evaporated working medium is guided to the turbine 82. After the turbine 82 has been rotated, the condenser 83 liquefies the working medium. The liquefied working medium is sent to the evaporator 81 again with a pump P6.

The turbine 82 is a power engine for the electric generator 84, thus the rotation of the turbine 82 causes the electric generator 84 to generate electricity. The electric power, which is generated by the electric generator 84, passes through the inverter 85 and the converter 86 and is sent to a power transmission system.

### === Operation ===

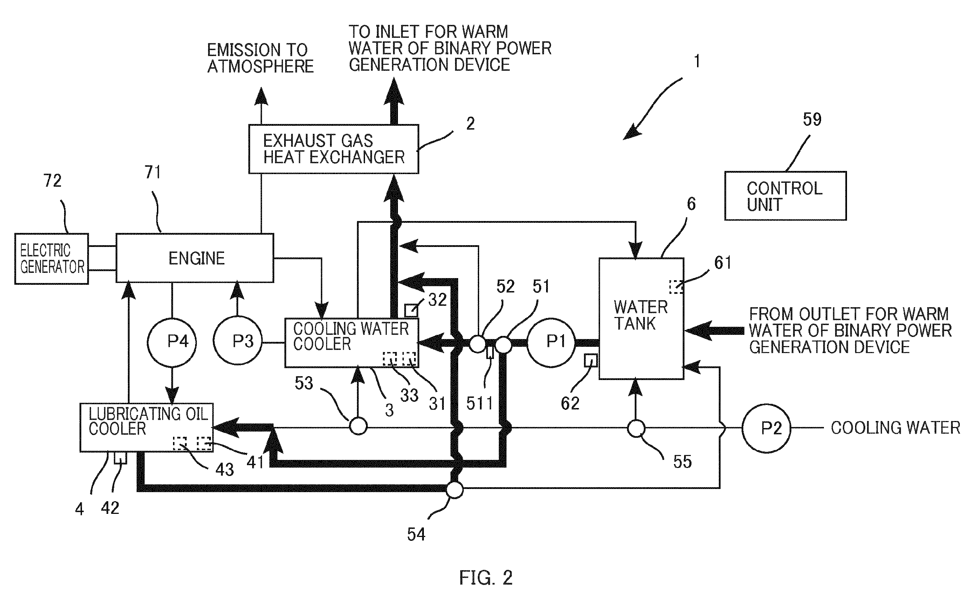

The following describes operations of the exhaust heat recovery apparatus of the embodiment of the present invention with reference to Fig. 2 to Fig. 8.

### <During Steady Operation of Engine>

Fig. 2 to Fig. 4 indicate by bold lines flow of water for the preheating system and of cooling water for the cooling water supply system during the steady operation of the engine.

Fig. 2 illustrates a basic flow of water during the steady operation of the engine. In this case, the temperature T2 of the cooling water cooler 3 and the temperatureT4 of the lubricating oil cooler 4 are lower than the allowable temperatures and are higher than the temperatures T1 and T6 of water output from the water tank 6 and the valve 51. The temperature T3 of water output from the cooling water cooler 3 is lower than the temperature T5 of water output from the lubricating oil cooler 4. The water level of the water tank 6 exceeds the lower limit and the flow rates of water flowing into the respective cooling water cooler 3 and lubricating oil cooler 4 exceed the lower limits.

At this time, the control unit 59 compares the measurement signals from the temperature sensors 62 and 41 and determines that the temperature T1 is lower than the temperature T4. The control unit 59 controls the valve 51 such that the water supplied to the valve 51 flows through both the cooling water cooler 3 and the lubricating oil cooler 4.

The control unit 59 compares the measurement signals from the temperature sensors 511 and 31 and determines that that temperature T6 is lower than the temperature T2. The control unit 59 controls the valve 52 such that the water supplied to the valve 52 flows through the cooling water cooler 3.

The control unit 59 compares the measurement signals from the temperature sensors 32 and 42 and determines that the temperature T3 is lower than the temperature T5. The control unit 59 controls the valve 54 such that the water supplied to the valve 54 flows through the exhaust gas heat exchanger 2.

The control unit 59 determines that the water level of the water tank 6 exceeds the lower limit by the measurement signal from the water level sensor 61 and controls the valve 55 such that the cooling water is not supplied to the water tank 6. The control unit 59 determines that the flow rates of the water flowing into the respective cooling water cooler 3 and lubricating oil cooler 4 exceed the lower limits by the measurement signals from the flowmeters 33 and 43. The control unit 59 controls the valve 53 such that the cooling water is not supplied to either the cooling water cooler 3 or the lubricating oil cooler 4.

Consequently, after flowing through both the main preheating system and the sub preheating system, the water is heated with the exhaust gas heat exchanger 2. The cooling water does not flow through the cooling water supply system.

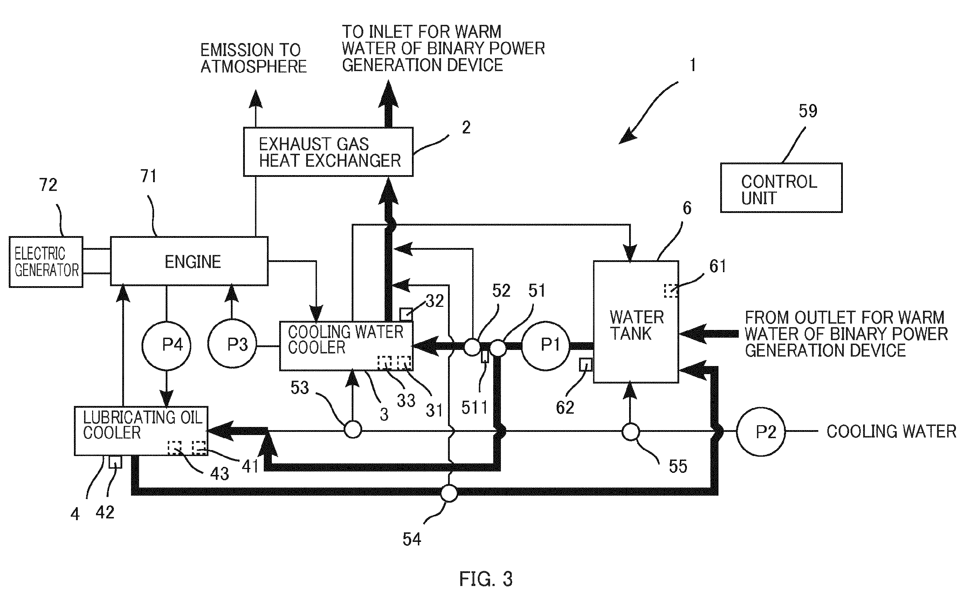

Fig. 3 illustrates a flow of water during the steady operation of the engine in the case where the temperature T3 of water output from the cooling water cooler 3 is higher than the temperature T5 of water output from the lubricating oil cooler 4. The control unit 59 compares the measurement signals of the temperature sensor 32 with the temperature sensor 42 and determines that the temperature T3 is higher than the temperature T5. The control unit 59 then controls the valve 54 such that the water output from the lubricating oil cooler 4 flows through the water tank 6.

Consequently, the exhaust gas heat exchanger 2 heats the water flowing through the main preheating system. The water flowing through the sub preheating system, however, is recovered to the water tank 6 for preheating again. This ensures avoiding a reduction in the temperature of water from the cooling water cooler 3 due to confluence of the water preheated by the cooling water cooler 3 and the water from the lubricating oil cooler 4, which has a temperature lower than a temperature of the preheated water, namely, for effective use of heat.

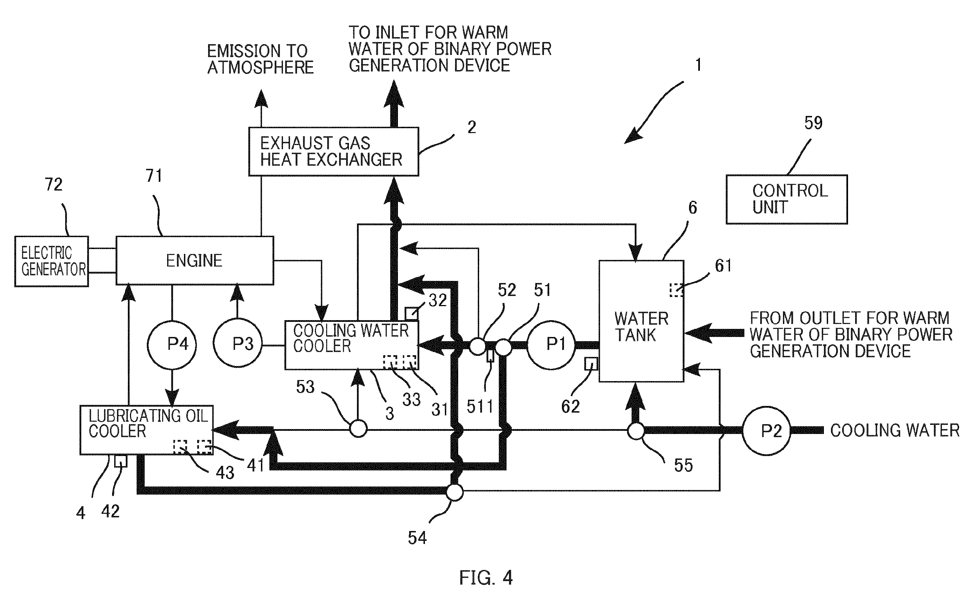

Fig. 4 illustrates flow of the water and the cooling water during the steady operation of the engine in the case where the water level of the water tank 6 falls below the predetermined lower limit. Based on the measurement signal from the water level sensor 31, the control unit 59 determines that the water level of the water tank 6 falls below the lower limit. The control unit 59 controls the valve 55 such that the cooling water is supplied to the water tank 6. Consequently, until the water level of the water tank 6 exceeds the lower limit, the cooling water is replenished via the valve 55.

### <At Engine Start>

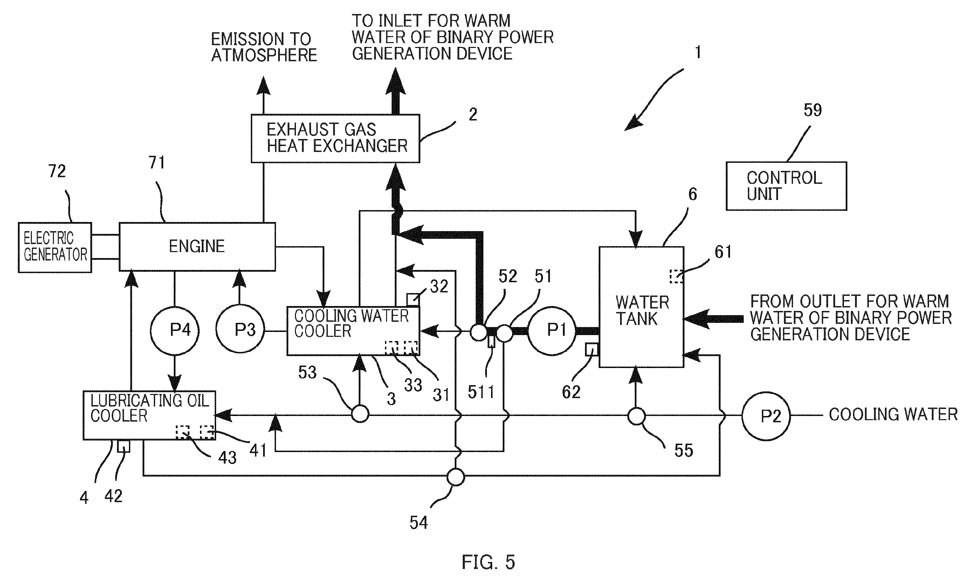

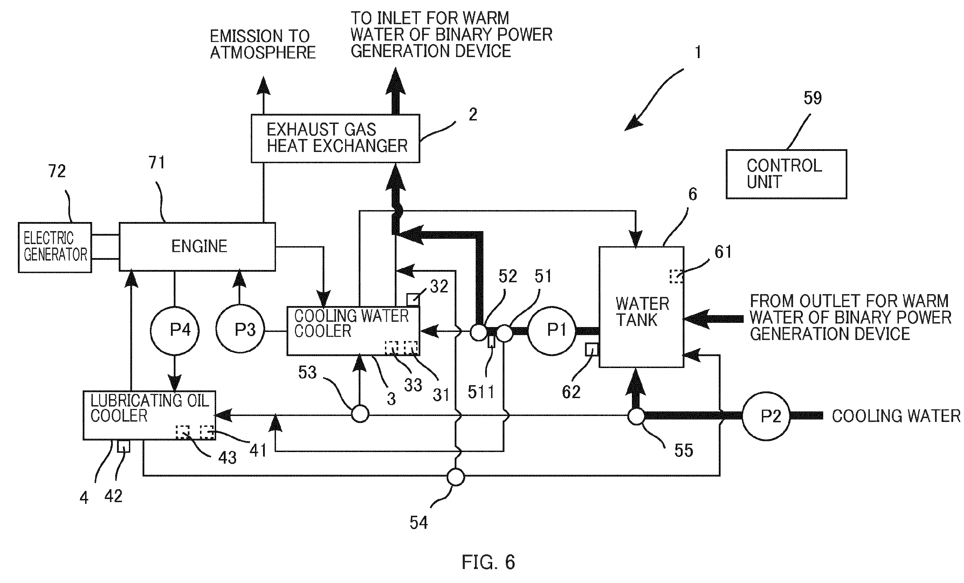

Fig. 5 andFig. 6 indicate by bold lines flow of water for the preheating system and of cooling water for the cooling water supply system at the engine 71 start.

Fig. 5 illustrates a basic flow of water at the engine 71 start. In this case, the temperature T2 of the cooling water cooler 3 is lower than the temperature T6 of water output from the valve 51 to the valve 52 side. The control unit 59 compares the measurement signals from the temperature sensors 31 and 511 and determines that the temperature T2 is lower than the temperature T6. The control unit 59 controls the valve 52 such that the water that has flowed from the valve 51 is supplied to the exhaust gas heat exchanger 2.

The temperature T4 of the lubricating oil cooler 4 is lower than the temperature T1 of water output from the water tank 6. The control unit 59 compares the measurement signals from the temperature sensors 41 and 62 and determines that the temperature T4 is lower than the temperature T1. The control unit 59 controls the valve 51 such that the water that has flowed from the water tank 6 is supplied to the valve 52.

Consequently, the water output from the water tank passes through the valves 51 and 52 and is supplied to the exhaust gas heat exchanger 2. This ensures avoiding a situation of providing heat to the cooling water of the engine 71 that should be cooled. This also ensures avoiding the case where the cooling water cooler 3 deprives the heat of the water from the water tank 6 that should be preheated, and effective use of heat may be achieved.

Fig. 6 illustrates flow of water and cooling water at the engine 71 start in the case where the water level of the water tank 6 does not reach the lower limit. Based on the measurement signal from the water level sensor 31, the control unit 59 determines that the water level of the water tank 6 does not reach the lower limit. The control unit 59 controls the valve 55 such that the cooling water is supplied to the water tank 6. Consequently, until the water level of the water tank 6 exceeds the lower limit, the cooling water is replenished via the valve 55.

### <While Main and Sub Preheating Systems in Exhaust Heat Recovery Apparatus are Superheated>

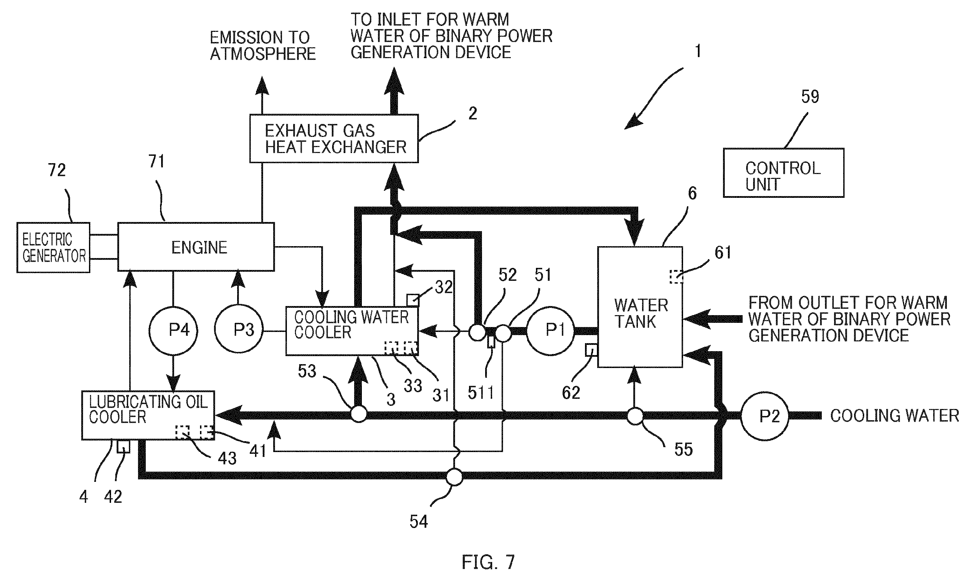

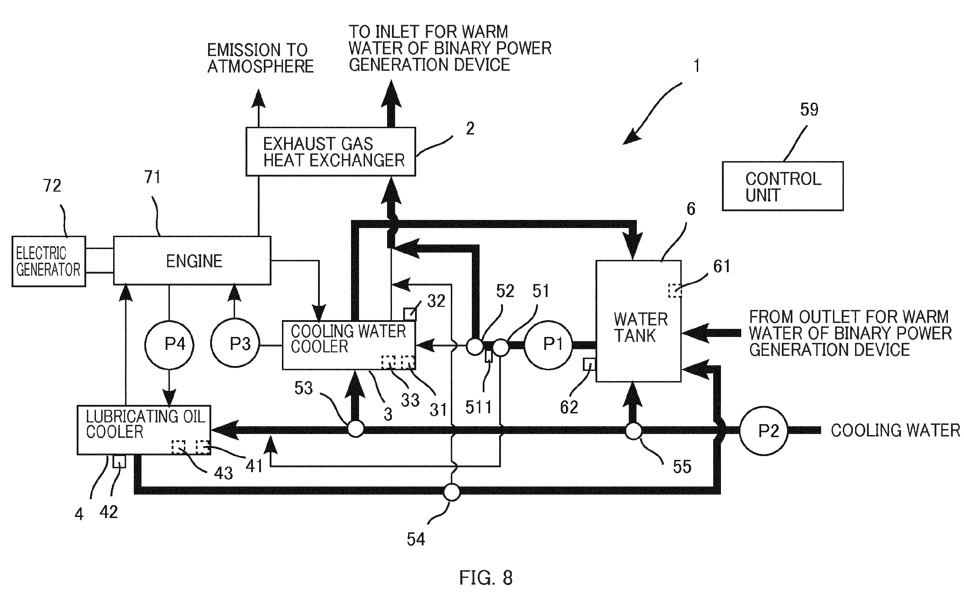

Fig. 7 andFig. 8 indicate by bold lines flow of water for the preheating system and of cooling water for the cooling water supply system when the main and the sub preheating systems of the exhaust heat recovery apparatus 1 are superheated.

Fig. 7 illustrates a basic flow of water when the main and the sub preheating systems of the exhaust heat recovery apparatus 1 are superheated. In this case, the temperatures T2 and T4 of the cooler 3 and the lubricating oil cooler 4 exceed the allowable temperatures of each of the cooler 3 and the lubricating oil cooler 4. The control unit 59 compares the measurement signals from the temperature sensors 31 and 41 and determines that the temperatures T2 andT4 exceed the respective allowable temperatures. The control unit 59 controls the valve 55 such that the cooling water is supplied to the valve 53 and controls the valve 53 such that the cooling water is supplied to the cooling water cooler 3 and the lubricating oil cooler 4.

The Temperature T1 of water output from the water tank 6 is higher than the temperature T4 of the lubricating oil cooler 4. The control unit 59 compares measurement results of the temperature sensors 62 and 41 and determines that the temperature T1 is higher than the temperature T4. The control unit 59 controls the valve 51 such that the water output from the water tank 6 is supplied to the valve 52.

Furthermore, the temperature T6 of water output from the valve 51 is higher than temperature T2 of the cooling water cooler 3. The control unit 59 compares the measurement signals from the temperature sensors 511 and 31 and determines that the temperature T6 is higher than the temperature T2. The control unit 59 controls the valve 52 such that the water output from the valve 51 is supplied to the exhaust gas heat exchanger 2.

Consequently, the water output from the water tank passes through the valves 51 and 52 and is supplied to the exhaust gas heat exchanger 2. The cooling water is supplied to the cooling water cooler 3 and the lubricating oil cooler 4 to cool these devices. The cooling water thus supplied is recovered from the cooling water cooler 3 and the lubricating oil cooler 4 to the water tank 6.

Superheating the cooling water cooler 3 and the lubricating oil cooler 4 overheats the engine 71, possibly resulting in damages of the engine 71 and its peripherals. Accordingly, by preventing the cooling water cooler 3 and the lubricating oil cooler 4 from being superheated, protection of the various devices is achieved.

Fig. 8 illustrates a flow of water when the water level of the water tank 6 falls below the lower limit in addition to superheat of the main and the sub preheating systems in the exhaust heat recovery apparatus 1. Since the control unit 59 controls the valve 55 so as to be open based on the measurement signal from the water level sensor 61, the cooling water is supplied to the water tank 6. This cools the entire superheated main and the sub preheating systems.

As described above, the cooling water cooler 3 contains the cooling water as the cooling medium to cool the peripheral area of the combustion chamber of the engine 71. The cooling water cooler 3 exchanges the heat between the water at a first temperature output from the warm water utilization facility and the cooling water of the engine 71. Thus, the cooling water cooler 3 outputs the water at a second temperature higher than the first temperature. By heat exchange between the water at the second temperature and the exhaust gas from the engine 71, the exhaust gas heat exchanger 2 outputs water at a third temperature, which is higher than the second temperature, and supplies the water to the binary power generation device 8. When the temperature of the cooling water of the engine 71 is lower than the temperature on a side of the cooling water cooler 3 to which the water at the first temperature is supplied, the valve 52 causes the water at the first temperature to be supplied to the exhaust gas heat exchanger 2. Accordingly, the water supplied from the warm water utilization facility side passes through the valve 52 and is supplied to the exhaust gas heat exchanger 2. That is, the water does not pass through the cooling water cooler 3. This ensures avoiding the situation of providing heat to the cooling water of the engine 71 that should be cooled. This also leads to prevention of the overheating of the engine 71 and the damages of the engine 71 and its peripherals in association with the overheating, in the case where the preheating system in the exhaust heat recovery apparatus 1 is superheated. This ensures avoiding the cooling water cooler 3 to deprive the heat of the water from the warm water utilization facility side that shouldbe preheated, achieving effective use of heat.

The lubricating oil cooler 4 contains the lubricating oil as the cooling medium to cool the inside of the engine 71. The lubricating oil cooler 4 exchanges the heat between the water at the first temperature output from the warm water utilization facility and the lubricating oil. This outputs the water at a fourth temperature higher than the first temperature and supplies the water to the exhaust gas heat exchanger 2. Accordingly, the exhaust heat recovery apparatus 1 includes two preheating providing means, the cooling water cooler 3 and the lubricating oil cooler 4, achieving effective use of heat.

The valve 51 is disposed on a side of the valve 52 into which the water at the first temperature flows. When the temperature of the lubricating oil is lower than the temperature on the side of the lubricating oil cooler 4 to which the water at the first temperature is supplied, the water at the first temperature to be supplied to the lubricating oil cooler 4 is supplied to the valve 52. This ensures avoiding the situation of providing heat to the lubricating oil of the engine 71 that should be cooled. This leads to prevention of overheating of the engine 71 and the damages of various devices in association with the overheating, in the case where the preheating system in the exhaust heat recovery apparatus 1 is superheated. This ensures avoiding the lubricating oil cooler 4 to deprive the heat of the water from the warm water utilization facility side that should be preheated, achieving effective use of heat.

The water tank 6 is disposed on a side of the valve 51 into which the water at the first temperature flows. The water tank 6 accumulates the water at the first temperature output from the warm water utilization facility and then the water is output to the valve 51. This ensures adjusting the amount of water flowing through the preheating system in the exhaust heat recovery apparatus 1 and ensures stably operating the exhaust heat recovery apparatus 1.

When the temperature on the side of the lubricating oil cooler 4 from which the water at the fourth temperature is output is lower than the temperature on the side of the cooling water cooler 3 from which the water at the second temperature is output, the valve 54 causes the water at the fourth temperature to be supplied to the water tank 6. Accordingly, the exhaust gas heat exchanger 2 heats the water output from the cooling water cooler 3. Meanwhile, the water output from the lubricating oil cooler 4 is recovered to the water tank 6 for preheating again. This ensures avoiding the reduction in the temperature of water from the cooling water cooler 3 due to the confluence of the water preheated by the cooling water cooler 3 and the water from the lubricating oil cooler 4, which has the temperature lower than the temperature of the preheated water, and the above is useful for effective use of heat.

The valve 53 causes water at a fifth temperature output froma facility different from the warm water utilization facility, such as waterworks, and lower than the temperatures of the cooling water and the lubricating oil of the engine 71 to be supplied to at least one of the cooling water cooler 3 and the lubricating oil cooler 4. This ensures securing the water flowing into the cooling water cooler 3 and the lubricating oil cooler 4, and the above is useful for stable operation of the exhaust heat recovery apparatus 1.

When the temperature on a side of the cooling water cooler 3 to which the water at the first temperature is supplied is higher than the allowable temperature of the cooling water of the engine 71 and when the temperature on a side of the lubricating oil cooler 4 to which the water at the first temperature is supplied is higher than the allowable temperature of the lubricating oil, the valve 53 preferably supplies the water at the fifth temperature to the cooling water cooler 3 and the lubricating oil cooler 4. This ensures preventing the cooling water cooler 3 and the lubricating oil cooler 4 from being superheated, avoiding the overheating of the engine 71 and the damages of the engine 71 and its peripherals in association with the overheating.

When the flow rates of the water at the first temperature supplied to the cooling water cooler 3 and the lubricating oil cooler 4 become the predetermined flow rates or less, the valve 53 preferably supplies the water at the fifth temperature to the cooling water cooler 3 and the lubricating oil cooler 4. This ensures securing constant flow rates of water flowing into the cooling water cooler 3 and the lubricating oil cooler 4, and the above is useful for the stable operation of the exhaust heat recovery apparatus 1.

When the amount of water accumulated in the water tank 6 becomes a predetermined amount or less, the valve 55 causes the water at the fifth temperature to be supplied to the water tank 6. Thus, this secures the accumulation of the water by the predetermined amount in the water tank 6. This means the stable supply of water from the water tank 6 to the cooling water cooler 3 and the lubricating oil cooler 4, and leads to the stable operation of the exhaust heat recovery apparatus 1.

The warm water utilization facility is preferably the binary power generation device. This ensures additional electric generation using the exhaust heat from the engine 71, achieving the effective use of the exhaust heat from the engine 71.

The embodiments are intended for easy understanding of the present invention and are not in any way to be construed as limiting the present invention. The present invention may be modified and improved without departing from the scope of the invention, and equivalents thereof are also encompassed by the invention.

For example, the first cooler and the second cooler are described corresponding to the cooling water cooler 3 and the lubricating oil cooler 4, however, the cooling water cooler 3 and the lubricating oil cooler 4 may be exchanged.

As another example of the warm water utilization facility, a heated pool is included.

### DESCRIPTION OF REFERENCE SIGNS

- 1: exhaust heat recovery apparatus
- 2: exhaust gas heat exchanger
- 3: cooling water cooler
- 4: lubricating oil cooler
- 51 to 55: valve
- 6: water tank

## Claims

1. An exhaust heat recovery apparatus of an engine, comprising:
an engine;
a first cooler that contains a first cooling medium to cool a first mechanism to be cooled of the engine, the first cooler being configured to exchange heat between water at a first temperature output from a warm water utilization facility and the first cooling medium to output water at a second temperature, the second temperature being higher than the first temperature;
a heat exchanger configured to exchange heat between the water at the second temperature and exhaust gas from the engine to output water at a third temperature and supply the water at the third temperature to the warm water utilization facility, the third temperature being higher than the second temperature; and
a first valve device configured to cause the water at the first temperature to be supplied to the heat exchanger when a temperature of the first cooling medium is lower than a temperature on a side of the first cooler to which the water at the first temperature is supplied.

2. The exhaust heat recovery apparatus of the engine according to claim 1, further comprising
a second cooler that contains a second cooling medium to cool a second mechanism to be cooled of the engine, the second cooler being configured to exchange heat between the water at the first temperature output from the warm water utilization facility and the second cooling medium to output water at a fourth temperature and supply the water at the fourth temperature to the heat exchanger, the fourth temperature being higher than the first temperature.

3. The exhaust heat recovery apparatus of the engine according to claim 2, further comprising
a second valve device disposed on a side of the first valve device into which the water at the first temperature flows, when a temperature of the second cooling medium is lower than a temperature on a side of the second cooler to which the water at the first temperature is supplied, the second valve device being configured to cause the water at the first temperature supplied to the second cooler to be supplied to the first valve device.

4. The exhaust heat recovery apparatus of the engine according to claim 3, further comprising
a water tank disposed on a side of the second valve device into which the water at the first temperature flows, the water tank being configured to accumulate the water at the first temperature output from the warm water utilization facility and subsequently to output the water to the second valve device.

5. The exhaust heat recovery apparatus of the engine according to claim 4, further comprising
a third valve device configured to cause the water at the fourth temperature to be supplied to the water tank when a temperature on a side of the second cooler to which the water at the fourth temperature is output is lower than a temperature on a side of the first cooler to which the water at the second temperature is output.

6. The exhaust heat recovery apparatus of the engine according to claim 5, further comprising
a fourth valve device configured to cause water at a fifth temperature to be supplied to at least one of the first and the second coolers, the water at the fifth temperature being output from a facility different from the warm water utilization facility, the fifth temperature being lower than the temperatures of the first and the second cooling mediums.

7. The exhaust heat recovery apparatus of the engine according to claim 6, wherein
the fourth valve device is configured to supply the water at the fifth temperature to the first and the second coolers when the temperature on the side of the first cooler to which the water at the first temperature is supplied is higher than an allowable temperature of the first cooling medium and the temperature on the side of the second cooler to which the water at the first temperature is supplied is higher than an allowable temperature of the second cooling medium.

8. The exhaust heat recovery apparatus of the engine according to claim 6, wherein
the fourth valve device is configured to supply the water at the fifth temperature to the first and the second coolers when flow rates of the water at the first temperature supplied to the first and second coolers become predetermined flow rates or less.

9. The exhaust heat recovery apparatus of the engine according to any one of claims 6 to 8, further comprising
a fifth valve device configured to cause the water at the fifth temperature to be supplied to the water tank when an amount of water accumulated in the water tank becomes a predetermined amount or less.

10. The exhaust heat recovery apparatus of the engine according to any one of claims 1 to 9, wherein
the first cooler is a cooling water cooler configured to cool cooling water of the engine.

11. The exhaust heat recovery apparatus of the engine according to any one of claims 2 to 10, wherein
the second cooler is a lubricating oil cooler configured to cool lubricating oil of the engine.

12. The exhaust heat recovery apparatus of the engine according to any one of claims 1 to 11, wherein
the warm water utilization facility is a binary power generation device.
